# FASCICULE DE BREVET EUROPEEN

(11) **EP 0 317 863 B1**
(45) Date de publication et mention de la délivrance du brevet: **02.06.1993**
(21) Numéro de dépôt: 88118949.2
(22) Date de dépôt: 14.11.1988
(51) Int. Cl.: G06F 5/06

(54) **Dispositif de retard d'au moins un train de données binaires à haut débit**
Verzögerungsvorrichtung für zumindest einen digitalen Hochgeschwindigkeitsdatenstrom
Delay device for at least one high-speed digital data stream

(30) Priorité: 18.11.1987 FR 8715945
(43) Date de publication de la demande: 31.05.1989
(73) Titulaire: ALCATEL TELSPACE, 92734 Nanterre Cédex (FR); ALCATEL N.V., NL-1077 XX Amsterdam (NL)
(72) Inventeur: Le Calvez, Michel, F-92100 Boulogne Billancourt (FR); Peruyero, Michel, F-75017 Paris (FR)
(74) Mandataire: Weinmiller, Jürgen

(56) Documents cités:
- EP-A- 0 018 518
- GB-A- 2 086 623
- US-A- 3 736 568
- US-A- 4 546 444
- PATENT ABSTRACTS OF JAPAN, vol. 9, no. 190 (P-378)[1913], 7 août 1985, page 134 P 378; & JP-A-60 59 433 (FUJITSU K.K.) 05-04-1985

## Description

L'invention concerne un dispositif de retard d'au moins un train de données binaires à haut débit.

L'invention permet de réaliser un registre à décalage synchrone de "n" coups d'horloges permettant de retarder de n bits un ou "m" trains données binaires à haut débit (par exemple de 25 à 40 mégabits).

Dans les dispositifs de l'art connu, on réalise ce retard à l'aide de bascule de type "D". Il faut alors distinguer les cas de faibles débits, et les cas de forts débits :
- pour de faibles débits (≦ 2 mégabits), on a recours à la technologie "MOS" ("Metal Oxyde Semiconductor") ; il existe des registres à décalage de 64, 128, ... 1024 bits dans un seul boîtier de 16 "pins" (ou broches),
- pour des débits supérieurs ; on a recours à des technologies plus rapides comme la "FAST" ou l'ECL 10000", voir "ECL 100 K" (ECL ou "Emitter Coupled Logic"). Cependant comme la consommation croit très vite avec la vitesse, et avec le nombre de bascules, le nombre de bascules "D" par boîtier diminue et n'atteint guère que le nombre de 8 ; on obtient alors des quantités de boîtiers trop importantes : Par exemple 128 (1024 : 8) boîtiers de 8 bascules pour un retard de 1024 bits, ou 48 (6 x 8) boîtiers de 8 bits pour faire un retard de 64 bits sur 6 trains binaires.

Aussi dans les dispositifs de l'art connu, dès que n et m augmentent, on a recours à des circuits qui associent un compteur binaire n, programmable à deux mémoires RAM ("Random Access Memory") identiques, le compteur binaire adressant séquentiellement les bits de données successivement dans l'une des mémoires RAM (écriture), pendant qu'il adresse simultanément l'autre mémoire RAM pour la lecture, puis dans l'autre mémoire. Le retard désiré est obtenu par le rapport de division (n) du compteur.

Un tel dispositif présente de nombreux inconvénients, et notamment :
- Il comprend un bus d'adresses à véhiculer ;
- Il nécessite, pour les grandes capacités, de multiplexer : En effet l'entrée et la sortie du bus de données sont alors communes ce qui a pour conséquence de nécessiter l'emploi de registres supplémentaires ;
- Lors de la mise sous tension, il y a n'importe quelles valeurs dans les mémoires : Il est donc nécessaire de prévoir une phase d'initialisation qui consiste en l'envoi d'un signal dans toutes les positions adresses.

Une demande de brevet de l'art connu, GB-A-2 086 623, décrit un registre écriture-lecture de type FIFO et une unité de calcul utilisant un tel registre ; ce registre étant capable de lire et d'écrire simultanément au cours d'un cycle mémoire de manière à gagner du temps dans les opérations de calcul.

Un brevet US-A-4 546 444 décrit un interface de compression de données comprenant un dispositif de mémoire travaillent de façon alternée. Il a pour but de réduire le volume de l'information qui doit être transmise au processeur local.

Un brevet US-A-3,736,568 décrit un dispositif selon le préambule de la revendication 1, ayant deux registres à décalage recevant les données d'entrée et délivrant les données retardées.

Les inconvénients des dispositifs de l'art connu sont palliés par le dispositif tel que caractérisé par la revendication 1.

Un tel dispositif présente, notamment, les avantages suivants:
- il est simple à mettre en oeuvre,
- il est économique, et consomme faiblement.

En ce qui concerne des caractéristiques de certaines mises en oeuvre préférées de l'invention, référence est faite aux revendications secondaires.

Les caractéristiques et avantages de l'invention ressortiront d'ailleurs de la description qui va suivre, à titre d'exemple non limitatif, en référence aux figures annexées sur lesquelles :
- la figure 1 représente schématiquement un dispositif de l'art connu ;
- la figure 2 représente le dispositif de l'invention ;
- la figure 3 représente la forme de signaux en fonction du temps en différents points du dispositif représenté à la figure 2.

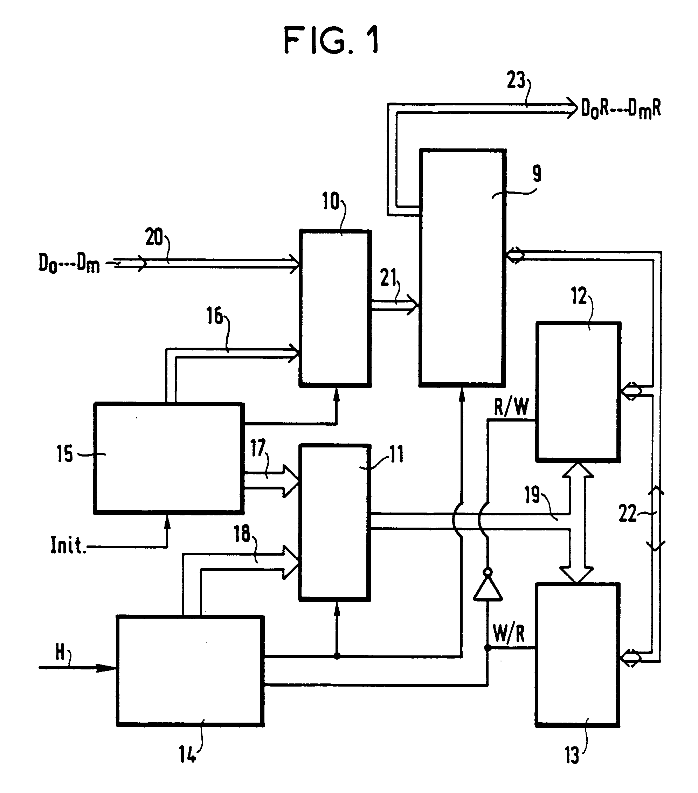

Le dispositif de l'art connu, représenté à la figure 1, comprend :
- un premier et un second multiplexeurs 10 et 11 ;
- une première et une seconde mémoires RAM 12 et 13 ;
- un éventuel démultiplexeur 9 pour les grandes capacités ;
- un compteur adresses 14 programmable ;
- un compteur 15 de remise à zéro des mémoires RAM 12 et 13.

Ces différents circuits sont reliés entre eux par un certain nombre de liaisons, correspondant aux :
- bus adresses 17, 18 et 19 ;
- bus de données 16, 20, 21, 22 et 23 ;
- signal horloge "H" ;
- signal d'initialisation "Init" ;
- signal d'écriture/lecture "W/R" ;
- signal de lecture/écriture "R/W" ;
- commande des multiplexeurs et du démultiplexeur.

Dans un tel dispositif on stocke les informations dans la première mémoire 12 de type RAM ("Random Access Memory) à accès séquenciel, par un bus (Do.... Dm) grâce au compteur d'adresse 14 incrémenté selon un signal horloge H.

Lorsque la première mémoire 12 de type RAM est complètement remplie, on adresse alors les informations sur la seconde mémoire 13 de type RAM grâce au même compteur d'adresse 14, la lecture de la première mémoire 12 de type RAM s'effectuant simultanément.

Ce dispositif nécessite :
- un système de remise à zéro des mémoires à l'initialisation nécessitant l' utilisation du compteur de remise à zéro 15 et des deux multiplexeurs 10 et 11 ;
- un éventuel démultiplexeur 9, lorsque les entrées/sorties des mémoires RAM 12 et 13 sont communes ;
- la distribution du bus d'adresses 19 aux deux mémoires RAM 12 et 13, ce qui, si m et n sont importants, demande une implantation sur circuit imprimé délicate, qui prend beaucoup de place pouvant nécessiter l'emploi d'une multicouche.

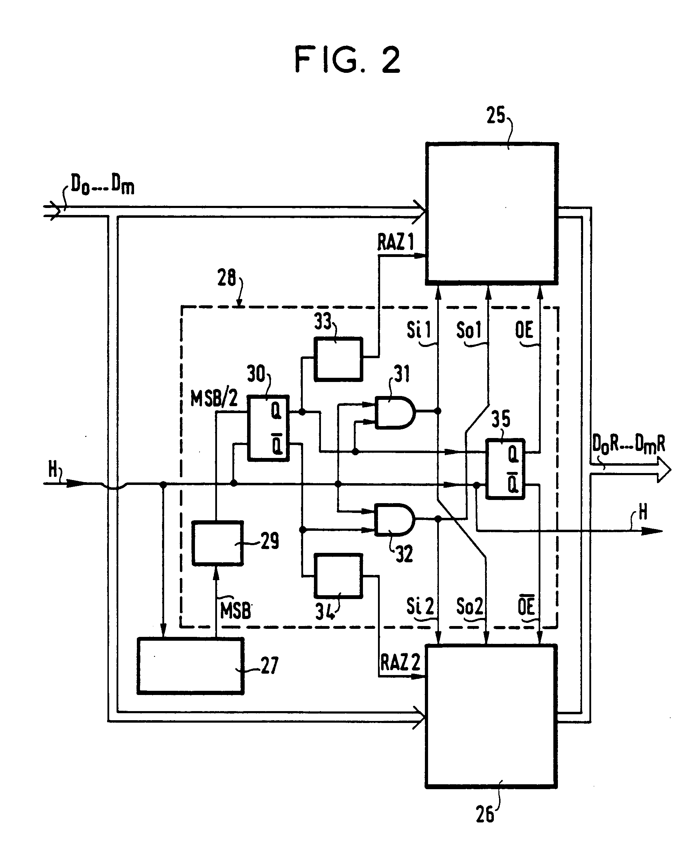

Par contre le dispositif de l'invention, représenté à la figure 2, permet d'obtenir le même résultat sans avoir recours aux circuits cités ci-dessus. Il présente les caractéristiques suivantes :
- les deux mémoires RAM sont remplacées par deux registres FIFO 25 et 26 (First in-First out) ;
- les bus d'adresses sont supprimés. Seul un signal "MSB" ("Most Significant Bit"), correspondant au bit de plus fort poids pour le retard τ désiré, est conservé pour l'aiguillage des horloges d' écriture et de lecture (la période T du signal MSB est égale à4τ) ;
- les multiplexeurs sont supprimés ;
- le démultiplexeur d'entrée/sortie est supprimé, il est remplacé par la fonction "Tristate" des FIFO ;
- le compteur d'initialisation est supprimé ainsi que les multiplexeurs associés, il est remplacé par un double monostable de remise à zéro qui initialise en dynamique les registres FIFO, juste avant l'écriture ;
- il est aisément cascadable et extensible
   - pour n bits de retard
   - pour m trains de données.

Le dispositif de l'invention comprend donc :
- un premier et un second registres FIFO 25 et 26 ;
- un compteur d'adresses 27 programmable permettant d'obtenir un signal MSB ("Most Significant Bit") ;
- un circuit 28 de commande d'écriture et de lecture des deux registres 25 et 26 comprenant notamment :
   . un diviseur par deux 29 pour obtenir un signal MSB divisé par deux (MSB|2) pour égaliser les temps d'écriture et de lecture dans les registres 25 et 26 ;
   . une bascule 30 de synchronisation de ce signal MSB/2 sur le signal horloge H, qui a un rythme égal à celui des données entrantes Do...Dm ;
   . deux portes ET 31 et 32 permettant de générer les signaux Si1 (ou So2) et Si2 (ou So1) qui sont les signaux d'écriture (ou de lecture) respectivement dans le premier et le second registre FIFO 25 cet 26 (ou en lecture respectivement dans le second et le premier registre FIFO 26 et 25) ;
   . deux monostables 33 et 34 permettant de générer des impulsions RAZ 1 et RAZ 2 d'initialisation instantanée des registres FIFO 25 et 26 juste avant leurs phases d'écriture respectives ;
- une bascule 35, de type D par exemple, qui sert à retarder le signal MSB/2 pour que chaque FIFO soit mise successivement dans un état passant (signal OE ou "output enable" mis à un niveau bas) pour permettre la sortie des informations stockées.

Pour chaque registre FIFO 25 et 26, on peut utiliser un certain nombre de cellules de FIFO (First in - First out) en série et en parallèle : Le fait d' augmenter le nombre de cellules FIFO en série permet d'augmenter le retard entre l'entrée des données Do....Dm et la sortie des données retardées DoR...DmR. Le fait d'augmenter le nombre de cellules FIFO en parallèle permet d' augmenter le nombre d'entrées Do...Dm.

En fonctionnement, on écrit les données entrantes Do...Dm dans le premier registre FIFO 25 (envoi de l'horloge écriture).

Puis on écrit les données entrantes dans le second registre FIFO 26, en même temps que l'on lit le premier registre FIFO 25 préalablement rempli.

Puis, inversement, on écrit le premier registre FIFO 25 pendant que l'on lit le deuxième registre FIFO 26 et ainsi de suite....

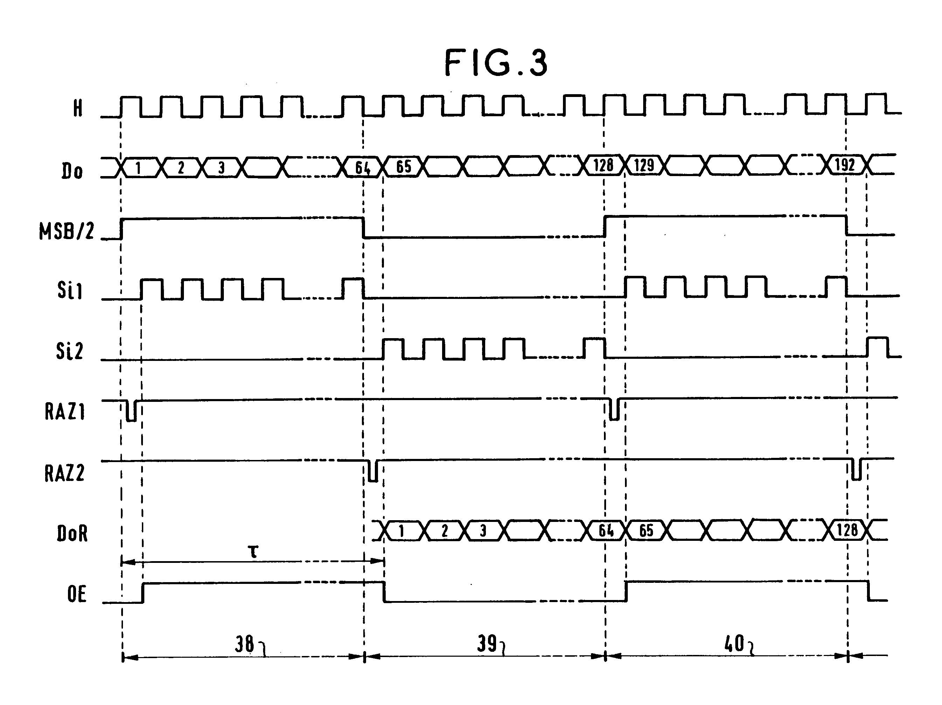

La figure 3 représente l'évolution dans le temps des différents signaux qui viennent d'être décrits. Ils correspondent successivement :
- dans une première phase 38, à une écriture dans le premier registre FIFO 25 des données Do (1 à 64) après une initialisation de celui-ci (impulsion RAZ1) ;
- dans une seconde phase 39, à une écriture dans le second registre FIFO 26 des données Do (65 à 128) après une initialisation de celui-ci (impulsion RAZ2) et à une lecture simultanée du premier registre FIFO 25 des données DoR (1 à 64) retardées d'un retard τ ;
- dans une troisième phase 40 à une écriture dans le premier registre 25 des données Do (129 à 192) après une initialisation de celui-ci (RAZ1) et une lecture simultanée du second registre FIFO 26 des données DoR (65 à 128) retardées du retard τ.

Le signal OE ("output enable") lorsqu'il a un niveau bas permet la sortie des données DoR... DmR. (1 à 64 et 129 à 192) du registre FIFO 25.

Le signal O̅E̅ ("output enable barre"), lorsqu'il a un niveau bas, permet la sortie des données DoR... DmR (65 à 128 .... et 193 à 256) du registre FIFO 26.

Dans un exemple de réalisation on retarde 6 trains binaires de 64 bits maximum, avec un débit de 25 MHz en utilisant 7 boîtiers, à savoir :
- 2 compteurs binaires (de type F163 de Fairchild ou Motorola par exemple) ;
- 2 registres FIFO de 9 bits x 64 (de type HC Mos 7030 de RTC et RCA par exemple) ;
- 1 boîtier de bascule D (de type F112 de Fairchild et Motorola par exemple) ;
- 2 boîtiers ET (ou "NAND") de type FOO de Fairchild et Motorola par exemple).

## Revendications

1. Dispositif de retard d'au moins un train de données binaires à haut débit, comprenant:
- un premier (25) et un second (26) registres de type FIFO-"First-in-First out"-, à m entrées et à n mots séries, recevant les données d'entrée (Do ... Dm) et délivrant les données retardées (DoR ... DmR); caractérisé en ce qu'il comprend en outre:
- un compteur binaire d'adresses programmable (27) recevant un signal horloge (H) et délivrant un signal MSB -"Most significant Bit"-, dont la durée est fonction du retard désiré τ;
- un circuit de commande (28) d'écriture-lecture dans lesdits registres (25, 26) comportant :
. un circuit d'aiguillage du signal horloge (H) alternativement vers chacun de ces deux registres (25, 26) pour permettre de réaliser simultanément l'écriture dans l'un des deux registres et la lecture de l'autre et réciproquement; ce circuit d'aiguillage comprenant :
* un diviseur par deux (29) pour obtenir un signal MSB divisé par deux pour égaliser les temps d'écriture et de lecture dans les deux registres (25, 26);
* une bascule (30) de synchronisation de ce signal MSB/2 sur le signal horloge (H) qui a un rythme égal à celui des données d'entrée (Do ... Dm); cette bascule délivrant un signal de synchronisation et son complément;
* deux portes ET (31, 32) recevant le signal horloge (H) sur leur première entrée, permettant de générer les signaux Si1 ou So2 et Si2 ou So1 qui sont les signaux d'écriture ou de lecture respectivement dans le premier et le second registres (25, 26) ou en lecture respectivement dans le second et le premier registre (26,25), l'une des portes ET recevant sur sa deuxième entrée le signal de synchronisation de la bascule (30); l'autre porte ET recevant le complément du signal de synchronisation;
. un circuit (33, 34) de génération d'impulsions de remise à zéro de ces registres (25, 26) immédiatement avant leur phases d'écriture respectives;
. un circuit (35) de génération d'un signal "Output Enable" recevant le signal de synchronisation de la bascule (30) et le signal d'horloge (H) pour permettre consécutivement la commande en lecture de chacun de ces registres (25, 26) pour la sortie des données, préalablement entrées, n coups d'horloge après le début d'une phase d'écriture.

2. Dispositif selon la revendication 1, caractérisé en ce que le circuit de remise à zéro des registres comprend deux monostables (33, 34) permettant de générer les impulsions d'initialisation instantanée des registres (25, 26) juste avant leurs phases d'écriture respectives.

3. Dispositif selon la revendication 1, caractérisé en ce que le circuit de génération d'un signal "Output Enable" comprend une bascule de pointage (35) qui sert à retarder le signal MSB/2 pour que chaque registre (25, 26) soit mis successivement dans un état passant (OE) dit "Output Enable", pour permettre la sortie des informations stockées.

4. Dispositif selon l'une quelconque des revendications précédentes, caractérisé en ce que chaque registre (25, 26) comporte plusieurs boîtiers FIFO en série, ce qui permet d'augmenter le retard.

5. Dispositif selon l'une quelconque des revendications précédentes, caractérisé en ce que chaque registre (25, 26) comporte plusieurs boîtiers en parallèle, ce qui permet d'augmenter le nombre d'entrées.

## Claims

1. A device for delaying at least one high bit rate data train, comprising first (25) and second (26) first-in-first-out (FIFO) type registers having "m" inputs and "n" bits in series adapted to receive the input data (Do, ..., Dm) and delivering the delayed data (DoR, ..., DmR), characterized in that it further includes:
- a programmable binary address counter (27) receiving a clock signal (H) and delivering a most significant bit signal (MSB) whose duration depends upon the desired delay τ;
- a write/read control circuit (28) for controlling writing and reading in said registers (25, 26) and comprising:
. a circuit for switching the clock signal (H) alternatively to each of the two registers (25, 26) in order to write in one of the two registers while simultaneously reading from the other and vice versa, said switching circuit including:
* a divide-by-two circuit (29) for obtaining a signal MSB/2 by dividing the signal MSB by two in order to equalize write and read times in the registers (25, 26);
* a bistable (30) for synchronizing said MSB/2 signal on the clock signal (H) which is at the same rate as the incoming data (Do, ..., Dm) which bistable delivers a synchronizing signal and its complementary signal;
* two AND-gates (31, 32) for receiving the clock signal (H) at their first input, and adapted for generating the signals Si1 or So2 and Si2 or So1 which are the write signals for the first and second FIFO registers (25, 26) or the read signals for the second and first FIFO registers (26, 25) respectively, with one of the AND-gates receiving the synchronization signal from the bistable (30) at its second input, and the other AND-gate receiving the complement of the synchronization signal;
. a circuit (33, 34) for generating pulses used to reset these registers (25, 26) to zero immediately prior to their respective write phases;
. a circuit (35) for generating an output enable signal and for receiving the synchronization signal from the bistable (30) and the clock signal (H), in order to allow consecutively for the read control of each of said registers (25, 26) in respect of the outputting of the data, previously input, with a delay of n clock pulses after the start of a write phase.

2. A device according to claim 1, characterized in that the circuit for resetting the registers to zero comprises two monostables (33, 34) for generating instantaneous initialization pulses for the registers (25, 26) immediately before their respective write phases.

3. A circuit according to claim 1, characterized in that the circuit for generating the output enable signal comprises a pointer bistable (35) for delaying the MSB/2 signal so that each register (25, 26) is successively put into the output state (OE) in order to allow the information stored therein to be output.

4. A circuit according to any one of the preceding claims, characterized in that each register (25, 26) comprises a plurality of FIFO units connected in series, thereby enabling the delay to be increased.

5. A circuit according to any one of the preceding claims, characterized in that each register (25, 26) comprises a plurality of units in parallel, thereby enabling the number of inputs to be increased.

## Patentansprüche

1. Einrichtung zur Verzögerung mindestens eines Binärdatenstromes hohen Durchsatzes mit einem ersten (25) und einem zweiten Register (26) vom Typ FIFO -"First-in, First-out" mit m Eingängen und n seriellen Bits, wobei die Register die Eingangsdaten (Do ... Dm) empfangen und die verzögerten Daten (DoR) liefern, dadurch gekennzeichnet, daß die Einrichtung weiter aufweist:
- einen programmierbaren binären Adressenzähler (27), der ein Taktsignal (H) empfängt und ein Signal MSB - "Most Significant Bit" - liefert, dessen Dauer von der gewünschten Verzögerung τ abhängt;
- eine Schreib-Lese-Steuerschaltung (28) für die Register (25, 26), die umfaßt:
. eine Schaltung zum abwechselnden Umsteuern des Taktsignals (H) an jedes der beiden Register (25, 26), um gleichzeitig das Einschreiben in eines der beiden Register und das Lesen des anderen Registers zu ermöglichen, und umgekehrt; wobei die Umsteuerschaltung aufweist:
* einen Halbierer (29) zur Gewinnung eines durch 2 geteilten Signals MSB, um die Schreib- und die Lesedauer in beiden Registern (25, 26) gleich groß zu machen,
* eine Kippschaltung (30) zum Synchronisieren des Signals MSB/2 mit dem Taktsignal (H), das eine Taktfrequenz entsprechend derjenigen der Eingangsdaten (Do .... Dm) entspricht; wobei diese Kippschaltung ein Synchronisiersignal und dessen Komplement liefert,
* zwei UND-Tore (31, 32), die an ihrem ersten Eingang das Taktsignal (H) empfangen und die Erzeugung der Signale Si1 oder So2 und Si2 oder So1 ermöglichen, die die Schreib- oder Lesesignale im ersten bzw. zweiten Register (25, 26), oder die Lesesignale im zweiten bzw. im ersten Register (26, 25) sind, wobei eines der UND-Tore an seinem zweiten Eingang das Synchronisationssignal der Kippschaltung (30) empfängt, während das andere UND-Tor das Komplement des Synchronisationssignals empfängt;
. eine Schaltung (33, 34) zur Erzeugung der Nullrückstellimpulse dieser Register (25, 26) unmittelbar vor ihren jeweiligen Schreibphasen;
. eine Schaltung (35) zur Erzeugung eines "Output Enable"-Signals, die das Synchronisationssignal der Kippschaltung (30) und das Taktsignal (H) empfängt, um anschließend die Auslesung jedes dieser Register (25, 26) für die Ausgabe der zuvor eingegebenen Daten nach Ablauf von n Taktimpulsen seit Beginn einer Schreibphase zu ermöglichen.

2. Einrichtung nach Anspruch 1, dadurch gekennzeichnet, daß die Schaltung zur Nullrückstellung der Register zwei monostabile Kippschaltungen (33, 34) enthält, die die Erzeugung der Impulse zur plötzlichen Initialisierung der Register (25, 26) unmittelbar vor deren jeweiligen Schreibphasen ermöglichen.

3. Einrichtung nach Anspruch 1, dadurch gekennzeichnet, daß die Schaltung zur Erzeugung eines "Output Enable"-Signals eine Zeiger-Kippschaltung (35) aufweist, die zur Verzögerung des MSB/2-Signals dient, damit nacheinander jedes Register (25, 26) in einen Ausgabezustand (OE), "Output Enable" genannt, versetzt wird, um das Ausgeben der gespeicherten Informationen zu ermöglichen.

4. Einrichtung nach einem beliebigen der vorhergehenden Ansprüche, dadurch gekennzeichnet, daß jedes Register (25, 26) mehrere FIFO-Bausteine in Reihe enthält, um die Verlängerung der Verzögerung zu ermöglichen.

5. Einrichtung nach einem beliebigen der vorhergehenden Ansprüche, dadurch gekennzeichnet, daß jedes Register (25, 26) mehrere Bausteine in Parallelschaltung aufweist, um die Vergrößerung der Anzahl der Eingänge zu ermöglichen.
